# DEMANDE DE BREVET EUROPEEN

(11) **EP 0 526 371 A1**
(43) Date de publication de la demande: **03.02.1993**
(21) Numéro de dépôt: 92450012.7
(22) Date de dépôt: 23.07.1992
(51) Int. Cl.: B23K 26/00, H02G 1/12

(54) **Procédé de découpe profonde par faisceau laser d'un matériau recouvrant un substrat et dispositifs pour sa mise en oeuvre**

(30) Priorité: 26.07.1991 FR 9109834
(71) Demandeur: AEROSPATIALE Société Nationale Industrielle, F-75781 Paris Cédex 16 (FR)
(72) Inventeur: Fuchs, Gilles, F-33160 Saint Aubin du Médoc (FR); Baraer, Patrick, F-27120 Pacy/Eure (FR)
(74) Mandataire: Thébault, Jean-Louis

(57) **Abrégé**

- L'invention concerne un procédé de découpe profonde par faisceau laser d'un matériau recouvrant un substrat et des dispositifs pour sa mise en oeuvre.
- L'objet de l'invention est un procédé de découpe profonde par faisceau laser d'un matériau recouvrant un substrat, ledit matériau absorbant le rayonnement laser et se présentant sous forme d'une feuille, pellicule, gaine ou analogue et le substrat étant en un matériau susceptible ou non de réfléchir ce rayonnement, caractérisé en ce qu'il consiste :
   - à transformer le faisceau de sortie de la source laser (1) en un pinceau mince (8), en sorte de créer un champ de focalisation (14) en forme de lame mince, présentant une profondeur de focalisation importante, pouvant atteindre plusieurs millimètres et à l'intérieur duquel les variations de la densité d'énergie du rayonnement laser sont inférieures à une valeur prédéterminée, suffisante pour entraîner l'enlèvement, par fusion ou ablation, dudit matériau sur toute son épaisseur,
   - et, par un déplacement relatif entre ledit champ de focalisation (14) et ledit matériau à découper (21), à faire défiler ce dernier sur toute son épaisseur dans ledit champ de focalisation (14) en maintenant ce champ sensiblement perpendiculaire à la surface externe, ou à une génératrice de la surface externe, dudit matériau.
- Application notamment au dénudage de câbles électriques.

## Description

La présente invention a trait à la découpe profonde à l'aide d'un faisceau laser d'un matériau recouvrant un substrat et, plus précisément, un matériau absorbant le rayonnement laser et recouvrant un substrat susceptible ou non de réfléchir ce rayonnement et vise plus particulièrement encore, bien que non exclusivement, le dénudage de câbles.

Par câbles, on entend tous conducteurs électriques, monofilaires, multifilaires, blindés ou non.

L'industrie aérospatiale, entre autres, utilise de grandes quantités de câbles pour les commandes et les liaisons électriques et en particulier des câbles blindés surgainés, constitués d'une pluralité de conducteurs électriques isolés par une gaine latérale. Ces conducteurs, placés les uns à côté des autres en faisceau, sont entourés d'un blindage recouvert d'une gaine protectrice et isolante.

Pour pouvoir les utiliser et les raccorder, il est nécessaire de dénuder leurs extrémités. Cette opération de dénudage consiste essentiellement à enlever, sur une certaine longueur, la gaine protectrice extérieure du câble pour laisser apparaître l'extrémité du blindage, sans détériorer celui-ci.

Les dispositifs de dénudage actuellement connus, qu'ils soient thermiques ou mécaniques, ne donnent pas satisfaction.

Les dénudeurs automatiques à couteaux de forme épousant la géométrie des câbles ne s'appliquent pas aux câbles ne présentant pas de symétrie de révolution, tels que les câbles blindés torsadés, pour lesquels seul le scalpel manuel est acceptable. Toutefois, cette technique du scalpel est primitive, prend du temps et devient vite contraignante dès lors que le volume de câblage devient important et est aléatoire en ce sens qu'elle est tributaire de la dextérité de l'opérateur, implique un contrôle systématique de qualité et aboutit néanmoins à un volume de rebut non nul.

Le risque d'endommagement des câbles peut être réduit par l'emploi de dénudeurs thermiques, particulièrement efficaces pour des conducteurs fins et ronds.

Mais ces outils sont lents et requièrent un calibrage précis des électrodes chauffantes, dont la température et la propreté doivent être contrôlées fréquemment. Malheureusement, ce procédé est inadapté au cas des films polyimides qui ne présentent pas de point de fusion. Il en est de même pour certains isolants qui ont tendance à adhérer aux fils conducteurs après chauffage.

Le laser est, par ailleurs, également utilisé pour l'attaque du revêtement extérieur d'un câble par ablation, c'est-à-dire par échauffement puis vaporisation du matériau absorbant. L'absence de contact entre le moyen de découpe et le câble permet d'envisager, si les plages de fonctionnement l'autorisent, une bonne reproductibilité de l'opération de dénudage, le résultat étant totalement dissocié du doigté ou du savoir-faire des opérateurs.

Il existe actuellement quelques machines permettant la découpe de l'isolant extérieur à l'aide d'un faisceau laser.

Ce procédé fonctionne dans le cas de câble simple, circulaire et d'épaisseur constante. Le principe est basé sur la focalisation du faisceau, en jouant sur les indices de réflexion des matériaux en présence, ainsi que sur les longueurs d'onde qu'ils peuvent absorber.

L'action du faisceau laser est limitée à la zone de focalisation, laquelle est de dimensions trop restreinte pour prendre en compte des variations de profils de la gaine en sorte que dans le cas de câble ou conducteurs ne présentant pas de symétrie de révolution, le dénudage de la gaine extérieure est non homogène.

Malheureusement de nombreux câbles utilisés dans l'industrie aéronautique et spatiale ne sont pas cylindriques et possèdent des formes non homogènes et des isolants et blindages particuliers.

Il existe donc un besoin de développer un nouveau principe de dénudage applicable à ces types de câbles, répondant à l'impératif de qualité totale, à savoir la coupe franche et nette sans détérioration des couches sous-jacentes et susceptible d'une automatisation complète , excepté la mise en place et le retrait des câbles.

L'invention a précisément pour but de proposer une nouvelle technique de dénudage à laser satisfaisant aux desiderata ci-dessus.

D'une manière plus générale, l'invention vise à proposer un nouveau procédé de découpe à l'aide d'un faisceau laser permettant d'inciser par ablation ou fusion locale d'un matériau absorbant le rayonnement laser et recouvrant un substrat susceptible ou non de réfléchir ce même rayonnement, de manière nette et franche et sur une profondeur d'incision bien supérieure à la profondeur de pénétration des dispositifs connus de découpe par laser et, ce, sans porter atteinte à l'intégrité du substrat.

A cet effet, l'invention a pour objet un procédé de découpe profonde par faisceau laser d'un matériau recouvrant un substrat, ledit matériau absorbant le rayonnement laser et se présentant sous forme d'une feuille, pellicule, gaine ou analogue et le substrat étant en un matériau susceptible ou non de réfléchir ce rayonnement, caractérisé en ce qu'il consiste :
- à transformer le faisceau de sortie de la source laser en un pinceau mince en sorte de créer un champ de focalisation en forme de lame mince, présentant une profondeur de focalisation importante, pouvant atteindre plusieurs millimètres et à l'intérieur duquel les variations de la densité d'énergie du rayonnement laser sont inférieures à une valeur prédéterminée, suffisante pour entraîner l'enlèvement, par fusion ou ablation, dudit matériau sur toute son épaisseur,
- et, par un déplacement relatif entre ledit champ de focalisation et ledit matériau à découper, à faire défiler ce dernier sur toute son épaisseur dans ledit champ de focalisation, en maintenant ce champ sensiblement perpendiculaire à la surface externe, ou à une génératrice de la surface externe, dudit matériau.

Au cours d'une telle découpe, le champ de focalisation agit à la manière d'une lame chauffante pénétrant par évaporation ou fusion du matériau à découper dans toute l'épaisseur de ce dernier, en sorte de réaliser une découpe nette et franche sans aucun dommage pour le substrat.

L'invention s'applique à la découpe d'un matériau en forme de feuille ou pellicule d'épaisseur de quelques dixièmes de millimètres, voire quelques millimètres, recouvrant un substrat de surface plane, concave ou convexe.

L'invention s'applique bien entendu au dénudage de câbles et, dans cette application, le câble à dénuder est entraîné en rotation sur au moins un tour autour d'un axe confondu avec son axe général ou parallèle à cet axe et orthogonal au plan de la lame mince fictive constituant ou délimitant ledit champ de focalisation et de façon à faire défiler la totalité de la section à découper du matériau à l'intérieur dudit champ de focalisation.

L'invention a également pour objet un dispositif pour la mise en oeuvre du procédé ci-dessus, comprenant une source laser générant un faisceau de rayons parallèles d'énergie radiante se propageant suivant un axe privilégié, caractérisé en ce qu'il comporte, en outre, une lentille optique cylindrique d'axe perpendiculaire à l'axe du faisceau laser incident, de longueur focale appropriêe et transformant ledit faisceau laser en ledit pinceau mince, le plan général de ladite lame mince fictive délimitant ledit champ de focalisation étant confondu avec le plan général du faisceau en forme de pinceau mince et des moyens pour entraîner le câble à dénuder en rotation sur au moins un tour autour d'un axe orthogonal au plan dudit champ de focalisation et de façon à faire défiler la totalité de la section de la gaine externe du câble dans ledit champ de focalisation.

La lentille cylindrique a une focale de préférence importante afin d'obtenir une profondeur de focalisation, dans ledit champ de focalisation, importante, pouvant atteindre plusieurs millimètres.

En amont de la lentille cylindrique est prévu, si le diamètre du faisceau laser de sortie est insuffisant et inférieur à la largeur prise perpendiculairement à une génératrice de la lentille cylindrique, un système optique destiné à élargir le faisceau incident et constitué, par exemple, d'une lentille optique divergente et d'une lentille optique convergente destinée à redresser le faisceau élargi par la lentille divergente et à lui donner un diamètre égal à la largeur, au sens défini ci-dessus, de la lentille cylindrique.

La source laser est par exemple une source à dioxyde de carbone d'une puissance de 10 watts suffisante pour le dénudage de câbles des types utilisés dans les industries aéronautiques et spatiales.

Un tel dispositif est utilisable pour le dénudage de tout câble et en particulier des câbles blindés torsadés ou autres câbles analogues à profil extérieur ne présentant pas de symétrie de révolution, dans la mesure où la gaine ou enveloppe externe est susceptible d'être enlevée par ablation ou fusion_sous l'action d'un faisceau laser. Ce dispositif est utilisable pour le dénudage de câble dont la couche sous-jacente à la gaine externe est en un matériau réfléchissant le rayonnement laser et également pour le dénudage de câble à couche sous-jacente non-réfléchissante, en totalité ou localement, à l'égard du rayonnement, du fait que la puissance ablative ou de fusion du rayonnement laser est concentrée sur la gaine externe et insuffisante pour agresser la couche sous-jacente.

C'est ainsi que sur le principe énoncé ci-dessus a été réalisé un dispositif de dénudage générant un faisceau en forme de pinceau mince de section sensiblement rectangulaire, de 14 mm de long sur 0,2 mm de large, créant une zone active ou efficace, dénommée champ de focalisation, où l'ablation ou fusion_par le rayonnement laser de la matière de la gaine à enlever est nette et franche, en forme de lame mince dont le plan général est confondu avec celui du pinceau mince, champ dont le plan général est perpendiculaire à l'axe du câble, d'une étendue de plusieurs mm et à l'intérieur duquel les variations de la densité d'énergie du rayonnement laser ne sont pas supérieures à 30 %.

Ce dispositif permet d'effectuer la découpe de gaines pouvant atteindre plusieurs millimètres d'épaisseur, quel que soit le diamètre du câble, dans la mesure où il est possible de faire tourner le câble autour d'un axe, celui ou non du câble, perpendiculaire au plan de la lame mince délimitant ledit champ de focalisation et de façon que la totalité de l'épaisseur de la gaine défile à l'intérieur dudit champ, c'est-à-dire avec cette condition qu'au cours d'une rotation complète du câble autour dudit axe de rotation, aussi bien les parties de la gaine les plus proches que les plus éloignées de l'axe de rotation passent à l'intérieur dudit champ de focalisation.

D'autres caractéristiques et avantages de l'invention ressortiront de la description qui va suivre d'un mode de réalisation préféré du dispositif de l'invention, description donnée à titre d'exemple uniquement et en regard des dessins annexés sur lesquels :
- Figure 1 est un schéma illustrant un mode de mise en oeuvre du procédé d'invention ;
- Figure 2 est un schéma illustrant les moyens de positionnement et déplacement d'un câble à dénuder dans le mode de réalisation de la figure 1 ;
- Figure 3 représente schématiquement le champ de focalisation dans le plan XOZ du dispositif de la figure 1 ;
- Figure 4 est une courbe illustrant la répartition spatiale de la tâche de focalisation du faisceau du dispositif ;
- Figure 5 illustre le degré de liberté théorique du câble'à dénuder dans le plan XOZ, et
- Figure 6 est un schéma illustrant les conditions d'utilisation pratique du dispositif de dénudage.

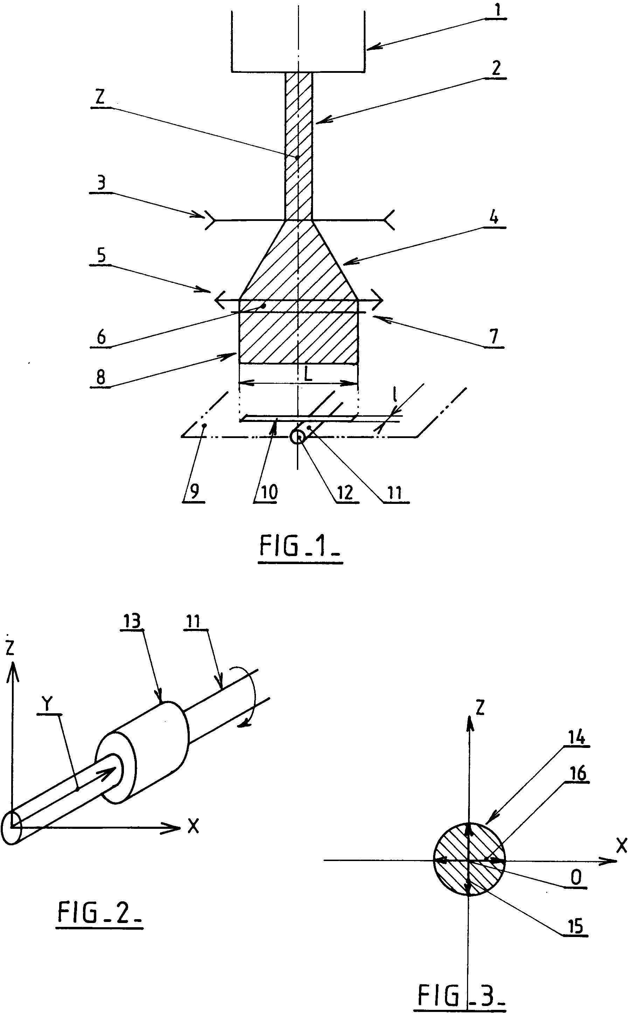

Sur la figure 1, on a représenté schématiquement en 1 une source laser à dioxyde de carbone générant un faisceau 2 de rayons parallèles d'énergie radiante se propageant suivant un axe privilégié Z.

Le laser émet par exemple une longueur d'onde de 10,6 micromètres, le faisceau de sortie 2 étant cylindrique et d'un diamètre de 4 mm.

Le faisceau de sortie 2 est élargi à l'aide d'une lentille divergente 3 de focale -23 mm, puis le faisceau élargi 4 est redressé et ramené cylindrique à l'aide d'une lentille convergente 5 de focale + 150 mm et, enfin, le faisceau redressé 6 est aplati à l'aide d'une lentille cylindrique 7 de focale + 100 mm suivant un pinceau mince 8 de section sensiblement rectangulaire.

A cet effet, la lentille cylindrique 7 est disposée avec sa face plane perpendiculaire au faisceau incident 6 et le pinceau mince 8 est focalisé dans le plan de focalisation 9 du système optique 3-5-7 suivant une tâche de focalisation 10 de forme générale rectangulaire et présentant un grand axe ou longueur L, parallèle à une génératrice de la lentille cylindrique 7, par exemple égal à 14 mm et un petit axe ou largeur 1, par exemple égal à 0,2 mm.

Les caractéristiques (dimensions et focales) des lentilles 3-5-7 sont déterminées en sorte d'avoir un pinceau mince 8 de section 14 mm x 0,2 mm dont les dimensions ont été jugées suffisantes pour traiter les différents diamètres de câble à dénuder susceptibles d'être rencontrés.

Les lentilles 3 et 5 ne sont nécessaires que si le diamètre du faisceau de sortie 2 de la source laser 1 est insuffisant. Si ce diamètre est suffisant, la lentille cylindrique 7 est placée directement dans le faisceau de sortie de la source laser et le pinceau mince 8 aura un grand axe L égal au diamètre dudit faisceau laser de sortie.

Le conducteur à dénuder 11 est par exemple placé avec son axe 12 dans le plan de focalisation 9 et perpendiculaire au grand axe L de la tâche de focalisation.

Le grand axe L, l'axe Z et l'axe du câble 11 définissent un système référentiel orthonormé XYZ comme illustré par la figure 2.

Le câble à dénuder 11 est maintenu coaxial à l'axe Y et est , en outre, entraîné en rotation autour de cet axe.

Sur la figure 2, on a représenté très schématiquement par la référence générale 13 des moyens propres à maintenir le câble, par exemple une buse de serrage auto-adaptable conventionnelle, associés à des moyens d'entraînement en rotation du câble 11 autour de son axe, par exemple un moteur électrique pas à pas.

Ces moyens 13 sont montés sur un système de déplacement en XYZ (non représenté) permettant de faire coïncider l'axe du câble 11 avec l'axe Y du référentiel XYZ , la partie de la gaine externe du câble à enlever se trouvant dans la partie centrale du faisceau 8.

A la suite d'essais avec des gaines polyimides susceptibles d'ablation, on a constaté qu'une découpe franche et nette de la gaine du câble impliquait de provoquer une évaporation instantanée de la gaine à l'endroit de la coupe.

Cette évaporation nécessite une quantité d'énergie par unité de surface (densité d'énergie) importante.

Le procédé de l'invention, dont la figure 1 illustre un mode de mise en oeuvre, permet d'appliquer dans toute l'épaisseur de la gaine à découper, que le câble soit de section régulière ou non, l'énergie nécessaire à un tel enlèvement, fusion ou ablation, des matériaux constitutifs des câbles à dénuder visés par l'invention.

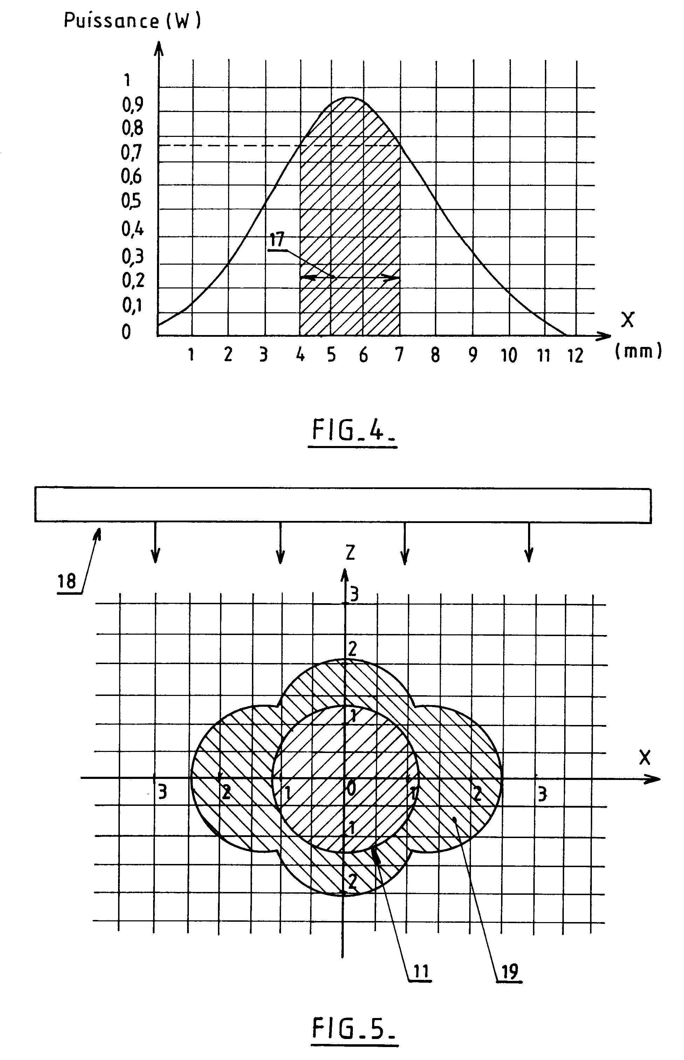

Sur la figure 3, on a schématisé en 14 une zone située dans le plan XOZ et centrée en O, intersection de l'axe Z du faisceau 8 et de l'axe du câble à dénuder.

La puissance maximale du faisceau est disponible en O et la zone 14, dénommée champ de focalisation, correspond aux points de l'espace où l'énergie fournie localement par le faisceau ne subit pas de variation importante.

Le champ 14 se caractérise par une profondeur de champ, suivant l'axe Z, qui dépend directement des focales des éléments optiques 3,5,7. Une telle profondeur de champ, symbolisée en 15 sur la figure 3, peut atteindre 3 mm environ.

Le champ 14 offre également un degré de liberté, suivant l'axe X et symbolisé en 16, qui peut également atteindre 3 mm.

Enfin, le champ 14 présente une certaine épaisseur, suivant l'axe Y, correspondant à la largeur 1 du faisceau 8.

Le degré de liberté 16 correspond à la partie centrale de la tâche de focalisation 10.

Compte tenu de la puissance (10 watts) du laser 1 utilisé, des caractéristiques des câbles à dénuder et de la nécessité d'avoir éventuellement une ablation du matériau de la gaine par évaporation instantanée, la limite de variation d'énergie a été fixée à 30 %.

Au delà du champ 14 l'énergie apportée par le laser risque d'entraîner une découpe de qualité insuffisante.

Bien entendu, cette valeur de 30 %, déterminée expérimentalement dans le cadre des câbles aérospatiaux, dépend de divers paramètres tels que la puissance du laser 1, les focales des éléments du système optique 3,5,7, les caractéristiques des câbles (composition, configuration) et de la qualité de découpe que l'on souhaite.

La figure 4 illustre la répartition spatiale de la tâche de focalisation et représente les variations de la puissance du faisceau 8 le long du grand axe L de la tâche 10.

On constate sur cette courbe que si l'on veut rester dans la zone de puissance maximale du faisceau 8, et plus précisément rester en deça d'une variation de 30 % de densité d'énergie, par rapport à la densité maximale disponible au centre de la tâche 10, il ne faut pas s'écarter de plus de 1,5 mm de part et d'autre dudit centre. On obtient ainsi une partie centrale "efficace" 17 de 3 mm qui correspond au degré de liberté du champ "utile" 16 de la figure 3.

Le procédé de l'invention consiste donc à créer ce champ de focalisation 14, à l'intérieur duquel la densité d'énergie ne varie pas de plus de 30%, et à faire défiler à l'intérieur dudit champ 14 la totalité de la section du câble à dénuder en entraînant en rotation le câble autour de l'axe O, sur au moins un tour complet, grâce aux moyens 13.

Le nombre de rotations et la vitesse de rotation, commandant le temps d'exposition de la gaine au faisceau 8, sont déterminés en fonction notamment des caractéristiques (matériaux et configuration) des câbles.

Avec un champ de focalisation 14 dont l'étendue, telle qu'illustrée par la figure 3, est de plusieurs millimètres carrés, on peut dénuder des câbles 11 (à section circulaire ou complexe) d'un diamètre maximal de l'ordre de 3 mm en faisant pivoter les câbles autour de leur axe et en maintenant cet axe confondu avec l'axe OY du système de référence XOZ et, ce, quelle que soit l'épaisseur de la gaine externe à découper.

La figure 5 résume le degré de liberté théorique du câble à dénuder dans le plan XOZ pour une qualité de dénudage répondant aux critères formulés plus haut.

Sur cette figure, on a représenté en 18 le faisceau 8 d'axe Z, en 11 la position nominale du câble (cylindrique) et en 19 le halo entourant le câble, symbolisant les écarts de position tolérables pour le câble, par rapport au centre O, selon les axes X et Z.

Le contour du halo 19 a été déterminé par des calculs qui indiquent par ailleurs qu'une variation de ± 1 mm n'entraîne qu'une diminution de 10 % de la puissance utile du faisceau laser et qu'une variation de ± 2,5 mm (correspondant au diamètre du câble 11 de la figure 5) n'entraîne qu'une diminution de 30 % de ladite puissance utile.

La figure 5 montre qu'en fait la position du câble dans le plan focal 9 n'est pas critique, une variation de ± 1,5 mm étant acceptable avec le montage optique de la figure 1.

Bien entendu le dispositif de l'invention permet de traiter convenablement des câbles, de section circulaire ou complexe, de diamètre bien supérieur à 3 mm, à condition de faire pivoter le câble de préférence autour de son axe, en maintenant cet axe de rotation parallèle à l'axe OY du dispositif de dénudage et à une distance de ce dernier telle que la totalité de la section de la gaine à enlever défile dans le champ de focalisation 14 au cours d'une rotation complète.

Si le câble est cylindrique avec une gaine d'épaisseur constante, le dispositif tel que celui illustré en figure 1 pourra découper des gaines d'épaisseur pouvant atteindre 3 mm environ.

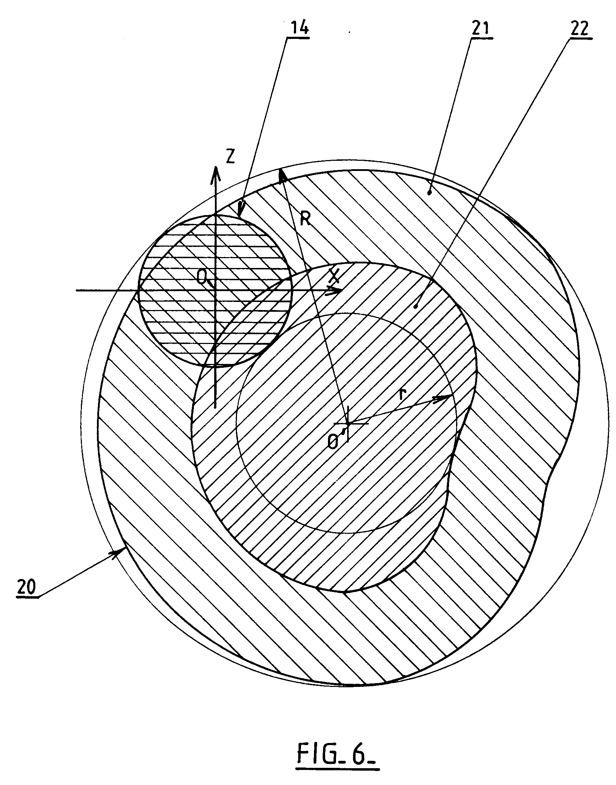

Si le câble est de section complexe, il faudra tenir compte des conditions illustrées par la figure 6.

Sur cette figure 6 on a représenté en 14 le champ de focalisation "efficace" du dispositif de dénudage et en 20 un câble dont le profil ne présente pas de symétrie de révolution. Le câble 20 comprend une gaine externe 21, d'épaisseur constante, enveloppant par exemple un ensemble 22 de conducteurs entourés d'un blindage.

L'axe de rotation du câble lors de son dénudage est indiqué en O′ et est parallèle à l'axe OY.

Cet axe O′ définit un rayon maximal R d'éloignement de la gaine 21 et un rayon minimal r de proximité de la gaine. Les deux cercles, de rayon R et r, délimitent entre eux une aire annulaire qui doit avoir avec l'aire du champ 14 une partie commune s'étendant d'un cercle à l'autre.

La figure 6 illustre le cas de l'épaisseur maximale de gaine 21, compte-tenu du profil particulier, qu'il est possible de couper de manière franche et nette avec le dispositif de dénudage selon l'invention, le champ 14 étant inscrit entre les deux cercles de rayon R et r.

On est ainsi sûr que la totalité de la section de la gaine 21, lorsque le câble 20 aura fait un tour complet autour de l'axe O′, aura défilé dans le champ 14.

Le procédé de l'invention est utilisable pour le dénudage de pratiquement tous les conducteurs existant sur le marché, à savoir monofilaires, bifilaires, trifilaires, torsadés ou non, blindés ou non, et de profil présentant ou non une symétrie de révolution, ainsi que pour le dénudage de fils élémentaires.

Les dimensions du champ 14, pour un même critère (30% par exemple) de variation admissible d'énergie du rayonnement disponible, peuvent bien sûr varier en fonction de la puissance de la source laser 1 et des focales du système optique, en particulier celle de la lentille cylindrique 7. Plus la focale de la lentille 7 sera courte, moins le champ 14 sera dilaté dans la direction OZ.

La présence de la lentille cylindrique permet d'obtenir un champ de focalisation 14 de profondeur (15) très substantiellement supérieure à celle des champs des systèmes de découpe à laser connus qui ne sont pas capables, comme il a été mentionné en exposé, de découper dans de bonnes conditions, découpe nette et franche sans atteinte de l'intégrité du substrat sous-jacent, des gaines de câbles, non seulement de profils ne présentant pas de symétrie de révolution, mais même de simples câbles à section circulaire régulière.

Le procédé de l'invention s'applique au dénudage de câble dont la couche ou substrat sous-jacent à la gaine externe est en un matériau réfléchissant le rayonnement laser, ainsi qu'au dénudage de câble dont ladite couche sous-jacente est en un matériau non réfléchissant, en totalité ou localement, à l'égard du rayonnement, du fait que l'énergie ablative ou de fusion du rayonnement laser peut être concentrée sur l'épaisseur de la gaine à enlever, cette énergie étant insuffisante, au-delà de la gaine, pour agresser ladite couche sous-jacente.

L'invention s'applique bien sûr au découpage de fenêtre sur des câbles, c'est-à-dire au dénudage en dehors des extrémités.

Il est à noter que le dispositif de l'invention peut avantageusement être automatisé, les opérations de dénudage étant fiables et reproductibles. Il suffit de munir le dispositif d'un micro-processeur programmable permettant l'introduction des divers paramètres relatifs à un type donné de câble à dénuder (nature, épaisseur, homogénéité de la gaine à découper, surface de la tâche de focalisation 10 à l'impact, vitesse de rotation du câble et nombre de rotations, puissance du faisceau 8 émise).

Bien que décrit dans son application principale au dénudage de câbles, le procédé de l'invention peut s'appliquer d'une manière générale à la découpe par ablation ou_fusion locale d'un matériau absorbant le rayonnement laser et sous forme d'un élément en feuille, pellicule ou analogue recouvrant un substrat suceptible ou non de réfléchir_ce même rayonnement.

Ce matériau à découper, par exemple pour accéder au substrat sous-jacent, pourrait être une feuille d'une épaisseur de quelques dixièmes de millimètres à quelques millimètres, plane, concave, convexe ou de forme complexe. Le procédé de l'invention permet de découper une telle feuille à l'aide par exemple d'un dispositif tel que celui formé par la source laser 7 et le système optique 3,5,7, qui serait déplacé au-dessus et à une distance déterminée de la surface de ladite feuille, à la manière d'un bistouri, le plan général de la lame mince délimitée fictivement par le champ de focalisation 14 étant maintenu sensiblement perpendiculaire au plan de ladite surface ou à une génératrice de celle-ci.

Enfin, l'invention n'est évidemment pas limitée au mode de réalisation représenté et décrit ci-dessus mais en couvre au contraire toutes les variantes, notamment en ce qui concerne la structure du système optique dans la mesure où sont réalisés les mêmes effets de champ de focalisation élargi comme illustré en figure 3.

De même, d'autres types de source laser que celui décrit plus haut pourraient éventuellement convenir.

## Revendications

1. Procédé de découpe profonde par faisceau laser d'un matériau recouvrant un substrat, ledit matériau absorbant le rayonnement laser et se présentant sous forme d'une feuille, pellicule, gaine ou analogue et le substrat étant en un matériau susceptible ou non de réfléchir ce rayonnement, caractérisé en ce qu'il consiste :
- à transformer le faisceau de sortie de la source laser (1) en un pinceau mince (8), en sorte de créer un champ de focalisation (14) en forme de lame mince, présentant une profondeur de focalisation importante, pouvant atteindre plusieurs millimètres et à l'intérieur duquel les variations de la densité d'énergie du rayonnement laser sont inférieures à une valeur prédéterminée, suffisante pour entraîner l'enlèvement, par fusion ou ablation, dudit matériau sur toute son épaisseur,
- et, par un déplacement relatif entre ledit champ de focalisation (14) et ledit matériau à découper (21), à faire défiler ce dernier sur toute son épaisseur dans ledit champ de focalisation (14) en maintenant ce champ sensiblement perpendiculaire à la surface externe, ou à une génératrice de la surface externe, dudit matériau.

2. Procédé suivant la revendication 1, plus particulièrement destiné au dénudage de câbles, caractérisé en ce que le câble à dénuder (11,20) est entraîné en rotation sur au moins un tour autour d'un axe confondu avec son axe général (12) ou parallèle à cet axe et orthogonal au plan de la lame mince fictive constituant ou délimitant ledit champ de focalisation (14) et de façon à faire défiler la totalité de la section à découper (21) du matériau à l'intérieur dudit champ de focalisation.

3. Dispositif pour la mise en oeuvre du procédé selon la revendication 1 ou 2, comprenant une source laser (1) générant un faisceau de rayons parallèles d'énergie radiante se propageant suivant un axe privilégié (Z), caractérisé en ce qu'il comporte, en outre, une lentille optique cylindrique (7) d'axe perpendiculaire à l'axe du faisceau laser incident, de longueur focale appropriée et transformant ledit faisceau laser en ledit pinceau mince (8), le plan général de ladite lame mince fictive délimitant ledit champ de focalisation (14) étant confondu avec le plan général du faisceau en forme de pinceau mince (8) et des moyens propres à effectuer ledit déplacement relatif entre ledit champ de focalisation (14) et ledit matériau à découper (21).

4. Dispositif suivant la revendication 3, plus particulièrement destiné à la mise en oeuvre du procédé selon la revendication 2, caractérisé en ce que lesdits moyens pour effectuer ledit déplacement relatif sont constitués par des moyens (13) pour entraîner le câble à dénuder (11,20) en rotation sur au moins un tour autour d'un axe (12,O′) orthogonal au plan dudit champ de focalisation (14) et de façon à faire défiler la totalité de la section de la gaine externe (21) du câble dans ledit champ de focalisation.

5. Dispositif suivant la revendication 3 ou 4, caractérisé en ce qu'entre la source laser (1) et la lentille cylindrique (7) est disposé un système optique (3,5) destiné à élargir et ramener sous forme cylindrique le faisceau de sortie (2) de ladite source laser (1).

6. Dispositif suivant la revendication 4, caractérisé en ce qu'il comporte un dispositif de serrage auto-adaptable (13) du câble à dénuder (11), associé à un moteur électrique (13) d'entraînement en rotation du câble autour de son axe, l'ensemble de ces moyens (13) étant monté sur une platine réglable en position dans les trois axes d'un référentiel orthonormé (XYZ) dont l'un des axes (Z) est l'axe dudit faisceau en forme de pinceau mince (8).
